(19)

Europäisches Patentamt

European Patent Office

Office européen des brevets

(11) **EP 4 678 941 A1**

(12) **EUROPÄISCHE PATENTANMELDUNG**

(43) Veröffentlichungstag:
**14.01.2026   Patentblatt 2026/03**

(21) Anmeldenummer: **24188296.8**

(22) Anmeldetag: **12.07.2024**

(51) Internationale Patentklassifikation (IPC):
**F16H 37/08** *(2006.01)*        **B60K 17/28** *(2006.01)*

(52) Gemeinsame Patentklassifikation (CPC):
**F16H 3/727; B60K 6/42; B60K 17/28;**
F16H 2037/0886

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder: **Rajani, Krutin**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **GETRIEBEANORDNUNG UND LANDWIRTSCHAFTLICHES ZUGFAHRZEUG**

(57)    Die Erfindung betrifft eine Getriebeanordnung (30) für einen Antriebsstrang (20) eines landwirtschaftlichen Zugfahrzeugs (10), mit einer Eingangswelle (50), einer ersten Ausgangswelle (40) für einen Fahrantrieb (24, 32, 34), einer zweiten Ausgangswelle (42) für einen Zapfwellenantrieb (44) und einer ersten Energiemaschine (EM1), welche über eine Verzweigungsstufe (48) mit der Eingangswelle (50) antriebsverbunden oder antriebsverbindbar ist, wobei Leistung der ersten Energiemaschine (EM1) an mindestens eine Koppel-Energiemaschine (EM2, EM3) übertragbar ist. Mindestens eine Koppel-Energiemaschine (EM2, EM3) ist über Kupplungen (K1, K2, K3, K4) einer Getriebeschaltstufe (46) wahlweise mit der ersten Ausgangswelle (40) und/oder mit der zweiten Ausgangswelle (42) antriebsverbindbar. Die Erfindung betrifft weiter ein landwirtschaftliches Zugfahrzeug (10), umfassend eine solche Getriebeanordnung (30).

FIG. 1

EP 4 678 941 A1

**Beschreibung**

Die Erfindung betrifft eine Getriebeanordnung gemäß dem Oberbegriff des unabhängigen Anspruchs 1 und ein landwirtschaftliches Zugfahrzeug gemäß dem Oberbegriff des unabhängigen Anspruchs 15.

Aus EP 3 945 665 A1 ist eine Getriebeanordnung für eine landwirtschaftliche Maschine bekannt, welche u.a. eine Eingangswelle an einem Verbrennungsmotor, einen leistungsverzweigten Getriebeabschnitt, ein Schaltgetriebe und eine Ausgangswelle enthält. Der leistungsverzweigte Getriebeabschnitt weist eine mit der Eingangswelle antriebsverbundene erste Koppel-Energiemaschine auf, welche zur Leistungsabgabe mit einer zweiten Koppel-Energiemaschine elektrisch verbunden ist. Die zweite Koppel-Energiemaschine ist Bestandteil einer magnetisch-elektrischen Umlaufgetriebestufe, welche mechanische und elektrische Antriebsleistung zusammenführt und an das Schaltgetriebe abgibt.

Ausgehend von diesem Stand der Technik liegt der Erfindung die Aufgabe zugrunde, eine Getriebeanordnung und ein landwirtschaftliches Zugfahrzeug vorzuschlagen, welche die Leistungsabgabe für einen Fahrantrieb und/oder Zapfwellenantrieb bei konstruktiv einfachem Aufbau variabler und effizienter gestalten.

Diese Aufgabe wird durch eine Getriebeanordnung mit den Merkmalen des Patentanspruchs 1 und ein landwirtschaftliches Zugfahrzeug mit den Merkmalen des Anspruchs 15 gelöst. Die abhängigen Ansprüche beziehen sich auf besonders vorteilhafte Ausführungsformen der Erfindung.

Gemäß Anspruch 1 wird eine Getriebeanordnung für einen Antriebsstrang eines landwirtschaftlichen Zugfahrzeugs vorgeschlagen, bevorzugt ein Traktor oder Schlepper. Die Getriebeanordnung umfasst eine Eingangswelle, eine erste Ausgangswelle für einen Fahrantrieb (z.B. mit einem Achsgetriebe und einem Differential an einer Hinterachse des Zugfahrzeugs), eine zweite Ausgangswelle für einen Zapfwellenantrieb und eine erste Energiemaschine. Diese erste Energiemaschine ist über eine Verzweigungsstufe mit der Eingangswelle antriebsverbunden oder antriebsverbindbar. Die erste Energiemaschine ist an mindestens eine weitere Energiemaschine (nachfolgend: Koppel-Energiemaschine) derart gekoppelt, dass die erste Energiemaschine (insbesondere elektrische oder hydraulische) Antriebsleistung an mindestens eine Koppel-Energiemaschine übertragen kann. Mindestens eine der vorhandenen Koppel-Energiemaschinen wiederum ist über Kupplungen einer Getriebeschaltstufe wahlweise mit der ersten Ausgangswelle und/oder mit der zweiten Ausgangswelle antriebsverbindbar.

Unter verbunden oder antriebsverbunden kann bevorzugt mechanisch verbunden, besonders bevorzugt antreibbar verbunden, also drehmoment- und/oder drehzahlübertragend verbunden, und/oder gekoppelt oder koppelbar, also mechanisch gekoppelt und/oder starr gekoppelt oder mechanisch koppelbar verstanden werden. Unter mechanisch verbunden, bevorzugt unter antreibbar verbunden und/oder gekoppelt oder koppelbar bzw. mechanisch gekoppelt und/oder starr gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Unterschiedliche Betriebszustände (z.B. geschlossen oder geöffnet) der Kupplungen können dazu genutzt werden, Antriebsleistung an der Ausgangsseite der Getriebeanordnung variabel zu verteilen. Somit kann Antriebsleistung von mindestens einer Koppel-Energiemaschine wahlweise nur an die erste Ausgangswelle oder nur an die zweite Ausgangswelle oder an beide Ausgangswellen weitergeleitet werden. Für diese Auswahl muss lediglich der Leistungsfluss zwischen der Koppel-Energiemaschine und der ersten und/oder zweiten Ausgangswelle unterbrochen oder geschlossen sein. Dies wird mit Hilfe der Kupplungen realisiert, welche zwischen der Koppel-Energiemaschine einerseits und der ersten und/oder zweiten Ausgangswelle andererseits eine Antriebsverbindung herstellen oder unterbrechen.

Beispielsweise ist eine Koppel-Energiemaschine über eine Kupplung mit der ersten Ausgangswelle antriebsverbindbar und über eine weitere Kupplung mit der zweiten Ausgangswelle antriebsverbindbar.

Die vorbeschriebene konstruktive Ausgestaltung ermöglicht es, einen Fahrantrieb und einen Zapfwellenantrieb des landwirtschaftlichen Zugfahrzeugs sehr effizient mit unterschiedlich hohen Antriebsleistungen zu versorgen. Antriebsgeschwindigkeiten und Antriebsdrehmomente können sehr variabel verändert werden. Außerdem unterstützen die Kupplungen ein qualitativ hochwertiges Schaltverhalten der Getriebeanordnung mit nahtlosen (engl. Seamless) Schaltvorgängen bei kurzer Schaltdauer.

Vorzugsweise sind sämtliche der in der Getriebeanordnung vorhandenen Koppel-Energiemaschinen über Kupplungen der Getriebeschaltstufe wahlweise mit der ersten Ausgangswelle und/oder mit der zweiten Ausgangswelle antriebsverbindbar. Hierdurch entstehen noch mehr Kombinationsmöglichkeiten zur Leistungsabgabe an die erste Ausgangswelle und die zweite Ausgangswelle. Dies ermöglicht mehr Gangstufen und deren feinere Abstufung.

In einer vorteilhaften Ausführungsform enthält die Verzweigungsstufe einen Verzweigungs-Radsatz oder ein Verzweigungs-Planetengetriebe. Der Verzweigungs-Radsatz ist insbesondere als eine Stirnradstufe ausgebildet, welche vorzugsweise zwei miteinander kämmende Zahnräder aufweist. Das Verzweigungs-Planetengetriebe kann als ein einfacher Planetenradsatz (mit Sonnenrad, Planetenrädern, Planetenträger, Hohlrad) oder als ein komplexer Planetensatz (z.B. mehrere kombinierte Planetenradsätze, gemeinsames Sonnenrad, gemeinsames Hohlrad, mindestens vier freie Wellen) ausgebildet sein. Alternativ kann auch mindestens eine Kupplung der Getriebeschaltstufe in einer Doppelfunktion ein funktionaler Bestandteil der Verzweigungsstufe sein. Die verschiedenen Bauteil-Varianten der Verzweigungsstufe ermöglichen mit einfachen technischen Mitteln eine effiziente Leistungsverzweigung. Gleichzeitig kann durch Auswahl einer der drei vorgenannten Alternativen die Anzahl der für die Getriebeanordnung realisierbaren Gangstufen technisch einfach verändert werden.

In einer vorteilhaften Weiterbildung enthält die Getriebeanordnung eine Summierstufe, d.h. eine Getriebestufe, welche Antriebsleistung von der Verzweigungsstufe und Antriebsleistung von mindestens einer Koppel-Energiemaschine zusammenführt. Eine Kombination der Summierstufe mit der Verzweigungsstufe und der Getriebeschaltstufe unterstützt die Realisierung einer vergrößerten Anzahl von Gangstufen bei gleichzeitig kompaktem Aufbau der Getriebeanordnung.

Vorzugsweise enthält die Summierstufe einen Summier-Radsatz oder ein Summier-Planetengetriebe. Der Summier-Radsatz ist insbesondere als eine Stirnradstufe ausgebildet, welche vorzugsweise zwei miteinander kämmende Zahnräder aufweist. Das Summier-Planetengetriebe kann als ein einfacher Planetenradsatz (mit Sonnenrad, Planetenrädern, Planetenträger, Hohlrad) oder als ein komplexer Planetensatz (z.B. mehrere kombinierte Planetenradsätze, gemeinsames Sonnenrad, gemeinsames Hohlrad, mindestens vier freie Wellen) ausgebildet sein. Alternativ kann auch mindestens eine Kupplung der Getriebeschaltstufe in einer Doppelfunktion ein funktionaler Bestandteil der Summierstufe sein. Die verschiedenen Bauteil-Varianten der Summierstufe ermöglichen mit einfachen technischen Mitteln eine effiziente Zusammenführung von Antriebsleistung. Gleichzeitig kann durch Auswahl einer der drei vorgenannten Alternativen die Anzahl der realisierbaren Gangstufen individuell an die Anforderungen der Getriebeanordnung angepasst werden.

Weiter vorzugsweise ist im Leistungsfluss zwischen dem Verzweigungs-Planetengetriebe und der ersten Energiemaschine ein Stufen-Radsatz angeordnet, welcher Antriebsleistung zwischen den beiden vorgenannten Komponenten überträgt. Zusätzlich oder alternativ ist im Leistungsfluss zwischen dem Summier-Planetengetriebe und einer Koppel-Energiemaschine ein Stufen-Radsatz angeordnet, welcher Antriebsleistung zwischen den beiden vorgenannten Komponenten überträgt. Der jeweilige Stufen-Radsatz ist insbesondere als eine Stirnradstufe ausgebildet, welche vorzugsweise zwei miteinander kämmende Zahnräder aufweist. Der jeweilige Stufen-Radsatz kann funktionell ein Bestandteil der Verzweigungsstufe bzw. der Summierstufe sein. Mittels des Stufen-Radsatzes ist eine effiziente Übertragung von Antriebsleistung möglich, z.B. von dem Verzweigungs-Planetengetriebe in Richtung der ersten Energiemaschine oder von der Koppel-Energiemaschine in Richtung des Summier-Planetengetriebes.

In weiterer Ausgestaltung der Erfindung ist die Verzweigungsstufe mit der Summierstufe und/oder die Summierstufe mit mindestens einer Kupplung der Getriebeschaltstufe auf spezifische Weise antriebsverbunden, so dass die Getriebeanordnung an deren funktionale Anforderungen mit einfachen technischen Maßnahmen effizient angepasst werden kann. Insbesondere ist in der Getriebeanordnung mindestens eines der folgenden Antriebsverbindungen realisiert:

- ein Rad des Verzweigungs-Radsatzes mit einem Sonnenrad oder mit einer Planetenträger-Welle oder mit einer Hohlrad-Welle des Summier-Planetengetriebes,
- ein Sonnenrad des Verzweigungs-Planetengetriebes mit einem Sonnenrad oder mit einer Planetenträger-Welle oder mit einer Hohlrad-Welle des Summier-Planetengetriebes,
- eine Planetenträger-Welle des Verzweigungs-Planetengetriebes mit einer Hohlrad-Welle des Summier-Planetengetriebes,
- ein Sonnenrad des Verzweigungs-Planetengetriebes mit einem Rad des Summier-Radsatzes,
- ein Sonnenrad oder eine Planetenträger-Welle oder eine Hohlrad-Welle des Verzweigungs-Planetengetriebes mit einer Antrieb- oder Abtriebseite mindestens einer Kupplung der Getriebeschaltstufe,
- ein Sonnenrad oder eine Planetenträger-Welle oder eine Hohlrad-Welle des Summier-Planetengetriebes mit einer Antrieb- oder Abtriebseite mindestens einer Kupplung der Getriebeschaltstufe.

Vorteilhaft ist die Eingangswelle mit mindestens einer der folgenden Komponenten antriebsverbunden:

- mit einem Rad des Verzweigungs-Radsatzes,
- mit einem Sonnenrad oder einer Planetenträger-Welle oder einer Hohlrad-Welle des Verzweigungs-Planetengetriebes,
- mit einem Sonnenrad oder einer Planetenträger-Welle oder einer Hohlrad-Welle des Summier-Planetengetriebes,
- mit einer Antrieb- oder Abtriebseite mindestens einer Kupplung der Getriebeschaltstufe.

Vorteilhaft ist die erste Ausgangswelle mit mindestens einer der folgenden Komponenten antriebsverbunden:

- mit einem Rad des Summier-Radsatzes,
- mit einem Sonnenrad oder einer Planetenträger-Welle oder einer Hohlrad-Welle des Summier-Planetengetriebes,

- mit einem Sonnenrad oder einer Planetenträger-Welle oder einer Hohlrad-Welle des Verzweigungs-Planetengetriebes,
- mit einer Antrieb- oder Abtriebseite mindestens einer Kupplung der Getriebeschaltstufe.

In Ausgestaltung der Erfindung ist die eine Koppel-Energiemaschine, insbesondere eine erste Koppel-Energiemaschine, mit der ersten Ausgangswelle für den Fahrantrieb und die andere der Koppel-Energiemaschinen, insbesondere eine zweite Koppel-Energiemaschine, mit der zweiten Ausgangswelle für den Zapfwellenantrieb verbunden, wenn eine Drehzahl ($n$) der ersten Koppel-Energiemaschine kleiner als ein oder gleich einem Drehzahlschwellwert ist, und die zweite Koppel-Energiemaschinen mit der zweiten Ausgangswelle verbunden ist, wenn eine Drehzahl der ersten Koppel-Energiemaschine grösser als der Drehzahlschwellwert ist. Ebenso kann die zweite Koppel-Energiemaschinen mit der ersten und zweiten Ausgangswelle verbunden sein, wenn eine Drehzahl ($n$) der ersten Koppel-Energiemaschine grösser als der Drehzahlschwellwert ist.

Aufgrund der Einteilung, dass das Drehmoment der ersten Koppel-Energiemaschine kleiner als der Drehmomentschwellwert oder grösser als der bzw. gleich dem Drehmomentschwellwert sein kann und/oder die Drehzahl der ersten Koppel-Energiemaschine kleiner oder grösser als der bzw. gleich dem Drehzahlschwellwert sein kann, werden zwei Modi der Getriebeanordnung und/oder des Zugfahrzeugs definiert. Mit anderen Worten, es werden zwei Geschwindigkeitsbereiche der Getriebeanordnung und/oder des Zugfahrzeugs definiert.

Der erste Modus oder der erste Geschwindigkeitsbereich liegt vor, wenn das Drehmoment der ersten Koppel-Energiemaschine kleiner als der oder gleich dem Drehmomentschwellwert ist und/oder die Drehzahl der ersten Koppel-Energiemaschine kleiner als der oder gleich dem Drehzahlschwellwert ist, also wenn gilt:

$$n \leq n_{schwell} \text{ und/oder } T \leq T_{schwell}$$

Bevorzugt wenn das Drehmoment der ersten Koppel-Energiemaschine kleiner als der Drehmomentschwellwert ist und/oder die Drehzahl der ersten Koppel-Energiemaschine kleiner als der Drehzahlschwellwert ist, also gilt:

$$n < n_{schwell} \text{ und/oder } T < T_{schwell}$$

mit

$n$ = Drehzahl der ersten Koppel-Energiemaschine
$n_{schwell}$ = Drehzahlschwellwert, insbesondere die max. Drehzahl der ersten Koppel-Energiemaschine
$T$ = Drehmoment der ersten Koppel-Energiemaschine
$T_{schwell}$ = Drehmomentschwellwert, insbesondere das max. Drehmoment der ersten Koppel-Energiemaschine

Ein Schaltpunkt liegt vor, wenn $n = n_{schwell}$ und/oder $T = T_{schwell}$ gilt. Entspricht die Drehzahl $n$ der ersten Koppel-Energiemaschine also dem Drehzahlschwellwert $n_{schwell}$, gilt also insbesondere $n = n_{schwell}$, und/oder entspricht das Drehmoment $T$ dem Drehmomentschwellwert $T_{schwell}$, gilt also $T = T_{schwell}$, erfolgt ein Gangwechsel, insbesondere ein synchronisierter Gangwechsel in den zweiten Modus oder den zweiten Geschwindigkeitsbereich. Der Gangwechsel kann unter Volllast und ohne Unterbrechung der Zugkraft erfolgen, und insbesondere nahtlos (engl. Seamless) erfolgen. Die erste und zweite Koppel-Energiemaschine können im Schaltpunkt die gleiche Drehzahl aufweisen, also insbesondere wenn $n = n_{schwell}$ und/oder $T = T_{schwell}$ gilt. Aufgrund der nahtlosen Schaltung können Vibrationen und/oder ein Schütteln (engl. Shift-Shock) der Getriebeanordnung vermieden werden.

Der zweite Modus oder der zweite Geschwindigkeitsbereich liegt vor, wenn das Drehmoment der ersten Koppel-Energiemaschine grösser als der Drehmomentschwellwert ist und/oder die Drehzahl der ersten Koppel-Energiemaschine grösser als der Drehzahlschwellwert ist, also wenn gilt:

$$n > n_{schwell} \text{ und/oder } T > T_{schwell}$$

mit

$n$ = Drehzahl der ersten Koppel-Energiemaschine
$n_{schwell}$ = Drehzahlschwellwert, insbesondere die max. Drehzahl der ersten Koppel-Energiemaschine
$T$ = Drehmoment der ersten Koppel-Energiemaschine
$T_{schwell}$ = Drehmomentschwellwert, insbesondere das max. Drehmoment der ersten Koppel-Energiemaschine

Im ersten Modus oder dem ersten Geschwindigkeitsbereich gilt folgendes, insbesondere kann im ersten Modus oder dem ersten Geschwindigkeitsbereich die Getriebeanordnung wie folgt betreibbar sein:

• Die erste Koppel-Energiemaschine, insbesondere nur die erste Koppel-Energiemaschine, ist mit dem Fahrantrieb verbunden, insbesondere gekoppelt und der Fahrantrieb mit der ersten Koppel-Energiemaschine antreibbar. Die erste Koppel-Energiemaschine kann somit als einzige Maschine Drehmoment und/oder Drehzahl, also insbesondere Traktion, für den Fahrantrieb bereitstellen. Dadurch kann vorteilhafterweise die Getriebeanordnung, und insbesondere bei niedrigen Geschwindigkeiten ($n \leq$

$n_{schwell}$ und/oder $T \leq T_{schwell}$) das Zugfahrzeug, mit einem konstanten Einzelübersetzungsverhältnis verwendet werden. Ausserdem kann ein hohes Traktionsmoment und eine hohe Zugkraft das Zugfahrzeug bei niedrigen Geschwindigkeiten ermöglicht werden.

- Die zweite Koppel-Energiemaschine, insbesondere nur die zweite Koppel-Energiemaschine, ist mit dem ersten Leistungsausgang verbunden, insbesondere gekoppelt und der ersten Leistungsausgang mit der zweiten Koppel-Energiemaschine antreibbar. Diese kann dadurch vorteilhafterweise als einzige Maschine Drehmoment und/oder Drehzahl für den ersten Leistungsausgang bereitstellen.

Im zweiten Modus oder dem ersten Geschwindigkeitsbereich gilt folgendes, insbesondere kann im zweiten Modus oder dem zweiten Geschwindigkeitsbereich die Getriebeanordnung wie folgt betreibbar sein:

- Die zweite Koppel-Energiemaschine, insbesondere nur die zweite Koppel-Energiemaschine, ist mit dem Fahrantrieb verbunden, insbesondere gekoppelt und der Fahrantrieb mit der zweiten Koppel-Energiemaschine antreibbar. Die erste Koppel-Energiemaschine kann vom Fahrantrieb entkoppelt sein.
- Ab dieser Drehzahl und/oder diesem Drehmoment stellt die erste Koppel-Energiemaschine kein Drehmoment und/oder Drehzahl, also insbesondere keine Traktion, mehr für den Fahrantrieb bereit und nur die zweite Koppel-Energiemaschine stellt das Drehmoment und/oder die Drehzahl, also insbesondere die vollständige Traktion für den Fahrantrieb bereit.
- Zusätzlich kann die erste Koppel-Energiemaschine, insbesondere nur die erste Koppel-Energiemaschine, mit dem ersten Leistungsausgang verbunden sein, insbesondere gekoppelt und der ersten Leistungsausgang mit der ersten Koppel-Energiemaschine antreibbar sein. Diese kann dadurch vorteilhafterweise als einzige Maschine Drehmoment und/oder Drehzahl für den ersten Leistungsausgang bereitstellen. Je nach gewählten Übersetzungsverhältnissen, kann dadurch vorteilhafterweise auch eine synchronisierte Schaltung des ersten Leistungsausgangs erreicht werden.

Mit anderen Worten, die Getriebeanordnung oder das Zugfahrzeug kann eine Steuereinheit umfassen. Die Steuereinheit kann mit der ersten und zweiten Koppel-Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Getriebeanordnung, insbesondere von Drehzahl- und/oder Drehmomentsensoren der Getriebeanordnung, und/oder der ersten und/oder zweiten Koppel-Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die ermittelte Drehzahl und/oder das ermittelte Drehmoment mit dem Drehzahlschwellwert $n_{schwell}$ und/oder dem Drehmomentschwellwert $T_{schwell}$ zu vergleichen. Die Steuereinheit kann konfiguriert sein, die Drehzahl und/oder das Drehmoment der Getriebeanordnung, insbesondere der ersten und zweiten Koppel-Energiemaschine einzustellen und/oder zu verstellen, insbesondere auch zu betreiben. Die Steuereinheit kann konfiguriert sein, die Getriebeanordnung, insbesondere die erste und zweite Koppel-Energiemaschine, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit kann konfiguriert sein, die Getriebeanordnung, insbesondere die erste und zweite Koppel-Energiemaschine, in Abhängigkeit von der Drehzahl und/oder dem Drehmoment in den ersten Modus einzustellen und/oder zu verstellen, insbesondere im ersten Modus zu betreiben, wenn das Drehmoment der ersten Koppel-Energiemaschine kleiner als ein Drehmomentschwellwert ist und/oder die Drehzahl der ersten Koppel-Energiemaschine kleiner als ein Drehzahlschwellwert ist. Alternativ oder zusätzlich, kann die Steuereinheit konfiguriert sein, die Getriebeanordnung, insbesondere die erste und zweite Koppel-Energiemaschine, in Abhängigkeit von der Drehzahl und/oder dem Drehmoment in den zweiten Modus einzustellen und/oder zu verstellen, insbesondere im zweiten Modus zu betreiben, wenn das Drehmoment der ersten Koppel-Energiemaschine grösser als der oder gleich dem Drehmomentschwellwert ist und/oder die Drehzahl der ersten Koppel-Energiemaschine grösser als der oder gleich dem Drehzahlschwellwert ist. Die Steuereinheit kann konfiguriert sein, die Getriebeanordnung und somit auch das Zugfahrzeug in Abhängigkeit von der Drehzahl und/oder dem Drehmoment der ersten Koppel-Energiemaschine und/oder dem Drehmomentschwellwert und/oder dem Drehzahlschwellwert einzustellen und/oder zu verstellen und/oder anzusteuern, bevorzugt also auch zu steuern und zu regeln, besonders bevorzugt den Modus einzustellen und/oder zu verstellen.

Vorteilhafterweise wird ein synchronisiertes Schalten von Gängen wie bei einem zweistufigen Getriebe ermöglicht, ohne dass tatsächlich ein zweiter Gang für eine der Koppel-Energiemaschinen erforderlich ist. Vorteilhafterweise kann auch ein nahtloses Schalten von Gängen realisiert werden. Auf ein Getriebe mit veränderbarem Übersetzungsverhältnis kann verzichtet werden. Auf diese Weise erhält man ausserdem vorteilhafterweise einen kompakten Aufbau der Getriebeanordnung. Aufgrund der nahtlosen Schaltung können Vibrationen und/oder ein Schütteln (engl. Shift-Shock) der Getriebeanordnung vermieden werden.

Die Kupplungen der Getriebeschaltstufe können eine erste und zweite Kupplung sein. Die erste Koppel-Energiemaschine kann mit der ersten Kupplung verbunden sein. Ausserdem kann die erste Koppel-Energiemaschine mit der ersten Kupplung oder über die erste Kupplung mit dem Fahrantrieb verbindbar oder verbunden, insbesondere auch lösbar verbunden. Dazu kann die erste Ausgangswelle mit der ersten Kupplung verbunden sein. Alternativ oder zusätzlich ist die zweite Koppel-Energiemaschine mit der zweiten Kupplung verbunden. Ausserdem ist die zweite Koppel-Energiemaschine mit der zweiten Kupplung oder über die zweite Kupplung mit dem ersten Leistungsausgang verbindbar oder verbunden, insbesondere auch lösbar verbunden. Dazu kann die zweite Ausgangswelle mit der zweiten Kupplung verbunden sein. Die erste Kupplung kann mit der ersten Ausgangswelle verbindbar oder verbunden sein. Die zweite Kupplung kann mit der zweiten Ausgangswelle verbindbar oder verbunden sein.

Die erste und zweite Kupplung können jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die jeweilige Kupplungen mit einer anderen Komponente, beispielsweise der ersten oder zweiten Ausgangswelle verbunden sein. In der zweiten Position kann die jeweilige Kupplungen mit der anderen Komponente, beispielsweise der ersten oder zweiten Ausgangswelle, nicht verbunden sein, also von dieser gelöst sein.

Die erste Koppel-Energiemaschine kann mit der ersten oder durch die erste Kupplung in der ersten Position mit dem Fahrantrieb, insbesondere der ersten Ausgangswelle verbunden sein, und in der zweiten Position nicht mit dem Fahrantrieb, insbesondere der ersten Ausgangswelle, verbunden, also entkoppelt sein. Die zweite Koppel-Energiemaschine kann mit der zweiten oder durch die zweite Kupplung in der ersten Position mit dem ersten Leistungsausgang, insbesondere der zweiten Ausgangswelle, verbunden sein, und in der zweiten Position nicht mit dem ersten Leistungsausgang, insbesondere der zweiten Ausgangswelle, verbunden, also entkoppelt sein.

Die erste und/oder zweite Kupplung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Getriebeanordnung kann eine erste Übersetzungsstufe, insbesondere eine erste Stirnradstufe oder einen ersten Zahnradsatz oder ein erstes Zahnradpaar oder einen ersten Planetensatz umfassen. Die erste Koppel-Energiemaschine kann durch die erste oder mit der ersten Übersetzungsstufe mit der ersten Kupplung verbunden sein. Die Getriebeanordnung kann eine zweite Übersetzungsstufe, insbesondere eine zweite Stirnradstufe oder einen zweiten Zahnradsatz oder ein zweites Zahnradpaar oder einen zweiten Planetensatz umfassen. Die zweite Koppel-Energiemaschine kann durch die zweite oder mit der zweiten Übersetzungsstufe mit der zweiten Kupplung verbunden sein.

Die erste und zweite Kupplung können mit der Steuereinheit signalverbunden und/oder wirkend gekoppelt und/oder signalübertragend und/oder datenleitend verbunden sein. Im Speziellen kann die Getriebeanordnung ein erstes Ventil oder eine erste Ventilanordnung, insbesondere ein erstes Steuerventil, oder einen ersten Aktuator zum Ansteuern und/oder Einstellen und/oder Verstellen der ersten Kupplung umfassen. Das erste Ventil oder die erste Ventilanordnung oder der erste Aktuator können mit der ersten Kupplung verbunden sein. Ebenso kann die Getriebeanordnung ein zweites Ventil oder eine zweite Ventilanordnung, insbesondere ein zweites Steuerventil, oder einen zweiten Aktuator zum Ansteuern und/oder Einstellen und/oder Verstellen der zweiten Kupplung umfassen. Das zweite Ventil oder die zweite Ventilanordnung oder der zweite Aktuator können mit der zweite Kupplung verbunden sein.

Die Steuereinheit kann mit dem ersten und/oder zweiten Ventil oder der ersten und/oder zweiten Ventilanordnung oder dem ersten und/oder zweiten Aktuator signalverbunden und/oder wirkend gekoppelt und/oder signalübertragend und/oder datenleitend verbunden sein. Die Steuereinheit kann konfiguriert sein, die erste Kupplung, insbesondere über das oder mit dem ersten Ventil oder die erste Ventilanordnung oder den ersten Aktuator, anzusteuern und/oder einzustellen und/oder zu verstellen. Die Steuereinheit kann konfiguriert sein, die erste Kupplung, insbesondere über das oder mit dem ersten Ventil oder die erste Ventilanordnung oder den ersten Aktuator, in die erste oder zweite Position einzustellen und/oder zu verstellen, insbesondere auch von der ersten in die zweite Position zu bewegen und umgekehrt. Die Steuereinheit kann konfiguriert sein, die zweite Kupplung, insbesondere über das oder mit dem zweiten Ventil oder die zweite Ventilanordnung oder den zweiten Aktuator, anzusteuern und/oder einzustellen und/oder zu verstellen. Die Steuereinheit kann konfiguriert sein, die zweite Kupplung, insbesondere über das oder mit dem zweiten Ventil oder die zweite Ventilanordnung oder den zweiten Aktuator, in die erste oder zweite Position einzustellen und/oder zu verstellen, insbesondere auch von der ersten in die zweite Position zu bewegen und umgekehrt. Die Getriebeanordnung weist die oben genannten Vorteile auf.

Die Getriebeanordnung kann eine dritte Kupplung umfassen. Die zweite Koppel-Energiemaschine kann mit der dritten Kupplung verbunden sein. Ausserdem kann die zweite Koppel-Energiemaschine mit der oder durch die dritte Kupplung mit dem Fahrantrieb verbindbar oder verbunden sein. Die dritte Kupplung kann mit der ersten Ausgangswelle verbindbar oder verbunden sein. Zusätzlich oder alternativ kann die Getriebeanordnung eine vierte Kupplung umfassen und die erste Koppel-Energiemaschine ist mit der vierten Kupplung verbunden. Ausserdem kann die erste Koppel-Energiemaschine mit der oder durch die vierte Kupplung mit dem ersten Leistungsausgang verbindbar oder verbunden sein. Die vierte Kupplung kann mit der zweiten Ausgangswelle verbindbar oder verbunden sein.

Die dritte und vierte Kupplung können jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die jeweilige Kupplungen mit einer anderen Komponente, beispielsweise der ersten oder zweiten Ausgangswelle, verbunden sein. In der zweiten Position kann die jeweilige Kupplungen mit der anderen Komponente, beispielsweise der ersten oder zweiten Ausgangswelle, nicht verbunden sein, also von dieser gelöst sein.

Die erste Koppel-Energiemaschine kann mit der vierten oder durch die vierte Kupplung in der ersten Position mit dem ersten Leistungsausgang, insbesondere der zweiten Ausgangswelle verbunden sein, und in der zweiten Position nicht mit dem ersten Leistungsausgang, insbesondere der zweiten Ausgangswelle, verbunden, also entkoppelt sein. Die zweite Koppel-Energiemaschine kann mit der dritten oder durch die dritte Kupplung in der ersten Position mit dem Fahrantrieb, insbesondere der ersten Ausgangswelle, verbunden sein, und in der zweiten Position nicht mit dem Fahrantrieb, insbesondere der ersten Ausgangswelle, verbunden, also entkoppelt sein.

Die dritte und/oder vierte Kupplung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Getriebeanordnung kann eine dritte Übersetzungsstufe, insbesondere eine dritte Stirnradstufe oder einen dritten Zahnradsatz oder ein drittes Zahnradpaar oder einen dritten Planetensatz umfassen. Die zweite Koppel-Energiemaschine kann durch die dritte oder mit der dritten Übersetzungsstufe mit der dritten Kupplung verbunden sein. Die Getriebeanordnung kann eine vierte Übersetzungsstufe, insbesondere eine vierte Stirnradstufe oder einen vierten Zahnradsatz oder ein viertes Zahnradpaar oder einen vierten Planetensatz umfassen. Die erste Koppel-Energiemaschine kann durch die vierte oder mit der vierten Übersetzungsstufe mit der vierten Kupplung verbunden sein.

Die dritte und/oder vierte Kupplung können mit der Steuereinheit signalverbunden und/oder wirkend gekoppelt und/oder signalübertragend und/oder datenleitend verbunden sein. Im Speziellen kann die Getriebeanordnung ein drittes Ventil oder eine dritte Ventilanordnung, insbesondere ein drittes Steuerventil, oder einen dritten Aktuator zum Ansteuern und/oder Einstellen und/oder Verstellen der dritten Kupplung umfassen. Das dritte Ventil oder die dritte Ventilanordnung oder der dritte Aktuator können mit der dritten Kupplung verbunden sein. Ebenso kann die Getriebeanordnung ein viertes Ventil oder eine vierte Ventilanordnung, insbesondere ein viertes Steuerventil, oder einen vierten Aktuator zum Ansteuern und/oder Einstellen und/oder Verstellen der vierten Kupplung umfassen. Das vierte Ventil oder die vierte Ventilanordnung oder der vierte Aktuator können mit der vierten Kupplung verbunden sein.

Die Steuereinheit kann mit dem dritten und/oder vierten Ventil oder der dritten und/oder vierten Ventilanordnung oder dem dritten und/oder vierten Aktuator signalverbunden und/oder wirkend gekoppelt und/oder signalübertragend und/oder datenleitend verbunden sein. Die Steuereinheit kann konfiguriert sein, die dritte Kupplung, insbesondere über das oder mit dem dritten Ventil oder die dritte Ventilanordnung oder den dritten Aktuator, anzusteuern und/oder einzustellen und/oder zu verstellen. Die Steuereinheit kann konfiguriert sein, die dritte Kupplung, insbesondere über das oder mit dem dritten Ventil oder die dritte Ventilanordnung oder den dritten Aktuator, in die erste oder zweite Position einzustellen und/oder zu verstellen, insbesondere auch von der ersten in die zweite Position zu bewegen und umgekehrt. Die Steuereinheit kann konfiguriert sein, die vierte Kupplung, insbesondere über das oder mit dem vierten Ventil oder die vierte Ventilanordnung oder den vierten Aktuator, anzusteuern und/oder einzustellen und/oder zu verstellen. Die Steuereinheit kann konfiguriert sein, die vierte Kupplung, insbesondere über das oder mit dem vierten Ventil oder die vierte Ventilanordnung oder den vierten Aktuator, in die erste oder zweite Position einzustellen und/oder zu verstellen, insbesondere auch von der ersten in die zweite Position zu bewegen und umgekehrt.

Weiter vorzugsweise ist die erste Energiemaschine über eine Kupplung der Getriebeschaltstufe mit der zweiten Ausgangswelle antriebsverbindbar. Alternativ oder zusätzlich kann die erste Energiemaschine über eine andere Kupplung der Getriebeschaltstufe mit der ersten Ausgangswelle antriebsverbindbar sein. Hierdurch kann die erste Energiemaschine die Funktionalität einer Koppel-Energiemaschine bezüglich der Getriebeschaltstufe übernehmen. Auf diese Weise können bei Bedarf andere spezifische Architekturlösungen für die Getriebeanordnung realisiert werden. In einer vorteilhaften Ausgestaltung der Erfindung ist eine Koppel-Energiemaschine über die Summierstufe mit der ersten Ausgangswelle antriebsverbunden. Diese technische Ausgestaltung unterstützt flexible Architekturlösungen für die Getriebeanordnung.

Vorteilhaft ist die erste Energiemaschine und/oder mindestens eine Koppel-Energiemaschine als eine Koppel-Energiemaschine (insbesondere Elektromotor) oder als eine Hydromaschine ausgebildet. Hierdurch können die einzelnen Energiemaschinen an die jeweils effizientesten Voraussetzungen (z.B. am Zugfahrzeug) bezüglich der Energieversorgung angepasst werden.

Vorzugsweise enthält die Getriebeanordnung mindestens einen Energiespeicher zum energetischen Anschluss an die erste Energiemaschine und/oder an mindestens eine Koppel-Energiemaschine. Da die Energiemaschinen bei der Getriebeanordnung ohnehin vorhanden sind, ermöglicht der mindestens eine Energiespeicher mit nur geringem Mehraufwand eine effiziente Hybridantriebsarchitektur für das Zugfahrzeug. Es kann auch eine Kombination technologisch unterschiedlicher Energiespeicher vorgesehen sein, wenn technologisch unterschiedliche Energiemaschinen vorhanden sind. Insbesondere ist ein elektrischer Energiespeicher und/oder ein hydraulischer Energiespeicher vorgesehen. Der Energiespeicher kann die angeschlossene(n) Energiemaschine(n) mit Energie versorgen. Umgekehrt kann in einem spezifischen Betriebsmodus des Zugfahrzeugs der Energiespeicher von der/den angeschlossenen Energiemaschine(n) mit Energie nachgeladen werden. Der Energiespeicher kann als eine elektrische Batterie bzw. ein Akku ausgebildet sein. Im Falle eines hydraulischen Energiespeichers kann dieser beispielsweise an Bord des Zugfahrzeugs von einer Arbeitshydraulik versorgt werden.

Die Erfindung betrifft weiter ein landwirtschaftliches Zugfahrzeug, bevorzugt ein Traktor oder Schlepper, mit einer Getriebeanordnung nach einem der Ansprüche 1 bis 14. Das landwirtschaftliche Zugfahrzeug kann außerdem einen Antriebsmotor, insbesondere Verbrennungsmotor, umfassen. Dieser Antriebsmotor ist mit der Eingangswelle verbunden oder mit ihr verbindbar. Dabei kann die Getriebeanordnung vom Antriebsmotor antreibbar sein und mit zumindest einer Fahrzeugachse des Zugfahrzeugs in Antriebsverbindung stehen und/oder kann mit einer weiteren Fahrachse des Zugfahrzeugs in Antriebsverbindung bringbar sein. Das erfindungsgemäße Zugfahrzeug weist die oben beschriebenen Vorteile der erfindungsgemäßen Getriebeanordnung auf.

Die erfindungsgemäße Getriebeanordnung und das erfindungsgemäße Zugfahrzeug ermöglichen eine effiziente Kombination einer leistungsverzweigten Getriebestufe (Verzweigungsstufe) mit einer Antriebsleistung zusammenführenden Getriebestufe (Summierstufe) und einer Getriebeschaltstufe, welche als Volllastschaltgetriebe ausgebildet sein kann. Die Kombination der vorgenannten Stufen kann mit einem verhältnismäßig einfachen Aufbau eine große Anzahl von Gangstufen realisieren mit einer entsprechend verbesserten Funktionalität und Leistungsfähigkeit der Getriebeanordnung. Die Anzahl der realisierten Gangstufen kann in einfacher Weise variiert werden, indem die Verzweigungsstufe und/oder die Summierstufe jeweils mit mindestens einem spezifischen Getriebe (z.B. Stirnradstufe, einfaches oder komplexes Planetengetriebe) ausgestattet sind. Insbesondere können hierbei die Anzahl der freien Wellen in dem oder den Planetengetriebe(n) variiert werden, um eine unterschiedliche Anzahl von Gangstufen zu erreichen.

Die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder der Energiespeicher und/oder die Leistungselektronik und/oder die erste und/oder zweite Koppel-Energiemaschine und/oder der Zapfwellenantrieb, können mit der Steuereinheit betreibbar, bevorzugt steuerbar und/oder regelbar, besonders bevorzugt ansteuerbar und/oder einstellbar und/oder verstellbar sein. Die Steuereinheit kann Signale zur Steuerung des Betriebs der Antriebsanordnung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder des Zugfahrzeugs ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsanordnung und/oder der Achse und/oder der Arbeitsmaschine erforderlich sind. Verfahren können als Programm oder Algorithmus ausgebildet sein, welches auf und/oder mit der Steuereinheit ausführbar sind. Die Steuereinheit kann jedes Gerät umfassen, das Daten von verschiedenen Sensoren analysiert, Daten vergleicht und die erforderlichen Entscheidungen treffen, um den Betrieb der Antriebsanordnung und/oder der Achse und/oder der Arbeitsmaschine und die erforderlichen Aufgaben zur Steuerung und/oder Regelung des Betriebs der Antriebsanordnung und/oder der Achse und/oder der Arbeitsmaschine, zu steuern und/oder zu regeln und/oder auszuführen. Die Steuereinheit kann mit den Bauteilen der Antriebsanordnung und/oder der Achse und/oder der Arbeitsmaschine, also insbesondere dem Fahrantrieb und/oder dem ersten Leistungsausgang, insbesondere der Zapfwelleneinheit, und/oder die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder die fünfte Koppeleinrichtung, insbesondere das fünfte Ventil oder die fünfte Ventileinrichtung oder der fünfte Aktuator, und/oder die sechste Koppeleinrichtung, insbesondere das sechste Ventil oder die sechste Ventileinrichtung oder der sechste Aktuator, und/oder der Energiespeicher und/oder die Leistungselektronik und/oder die erste und/oder zweite Koppel-Energiemaschine die Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen . Die Steuereinheit kann unmittelbar mit der in einer Kabine der Arbeitsmaschine angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1      eine schematische Darstellung eines erfindungsgemäßen landwirtschaftlichen Zugfahrzeugs, und

Fig. 2      eine schematische blockschaltbildartige Darstellung eines ersten Ausführungsbeispiels der Architektur der erfindungsgemäßen Getriebeanordnung, und

Fig. 3      eine schematische blockschaltbildartige Darstellung eines weiteren Ausführungsbeispiels der Architektur der erfindungsgemäßen Getriebeanordnung, und

Fig. 4A      eine schematische Darstellung eines ersten Ausführungsbeispiels der Architektur gemäß Fig. 2, und

Fig. 4B      eine schematische Darstellung eines weiteren Ausführungsbeispiels der Architektur gemäß Fig. 2, und

Fig. 5A      eine schematische Darstellung eines weiteren Ausführungsbeispiels der Architektur gemäß Fig. 2, und

Fig. 5B      eine schematische Darstellung eines weiteren Ausführungsbeispiels der Architektur gemäß Fig. 2, und

Fig. 5C      eine schematische Darstellung eines weiteren Ausführungsbeispiels der Architektur gemäß Fig. 2, und

Fig. 6A      eine schematische Darstellung eines weiteren Ausführungsbeispiels der Architektur gemäß Fig. 2, und

Fig. 6B      eine schematische Darstellung eines weiteren Ausführungsbeispiels der Architektur gemäß Fig. 2, und

Fig. 7      eine schematische Darstellung eines ersten Ausführungsbeispiels der Architektur gemäß Fig. 3, und

Fig. 8      eine schematische Darstellung eines weiteren Ausführungsbeispiels der Architektur gemäß Fig. 3, und

Fig. 9      eine schematische Darstellung eines weiteren Ausführungsbeispiels der Architektur gemäß Fig. 3.

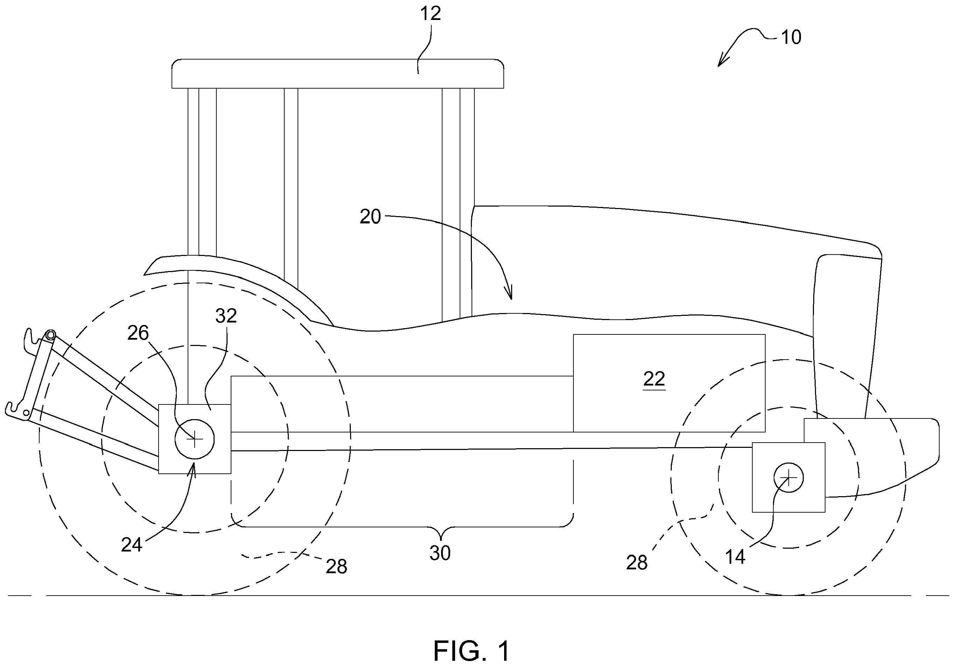

Figur 1 zeigt eine schematische Darstellung eines erfindungsgemäßen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur. Die vorliegend beschriebene Getriebestruktur kann im Kraft- und Momentenfluss, ausgehend vom Antriebsmotor 22, eine erfindungsgemäße Getriebeanordnung 30 und einen Fahrantrieb 24 an der hinteren Fahrzeugachse 26 mit einem hinteren Achsgetriebe 32 und einem Differential 34 (Ausgleichgetriebe) aufweisen.

Mit der Getriebeanordnung 30 lässt sich Antriebsleistung des Antriebsmotors 22 mit unterschiedlichen Gangstufen auf eine erste Ausgangswelle 40 und auf eine zweite Ausgangswelle 42 der Getriebeanordnung 30 übertragen. Die mit der ersten Ausgangswelle 40 in Antriebsverbindung stehende hintere Fahrzeugachse 26, welche eine Drehung der vorderen und/oder hinteren Fahrzeugachse (über damit verbundene Bodeneingriffsmittel) in einen Vorschub des Traktors wandelt, kann daher abhängig von einer in der Getriebeanordnung 30 gewählten Gangstufe mit unterschiedlicher Drehzahl angetrieben werden. Folglich ist ein mit der Getriebeanordnung 30 ausgestatteter Traktor abhängig von der in der Getriebeanordnung 30 gewählten Gangstufe in unterschiedlichen Geschwindigkeitsbereichen bewegbar.

Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern getragen werden kann.

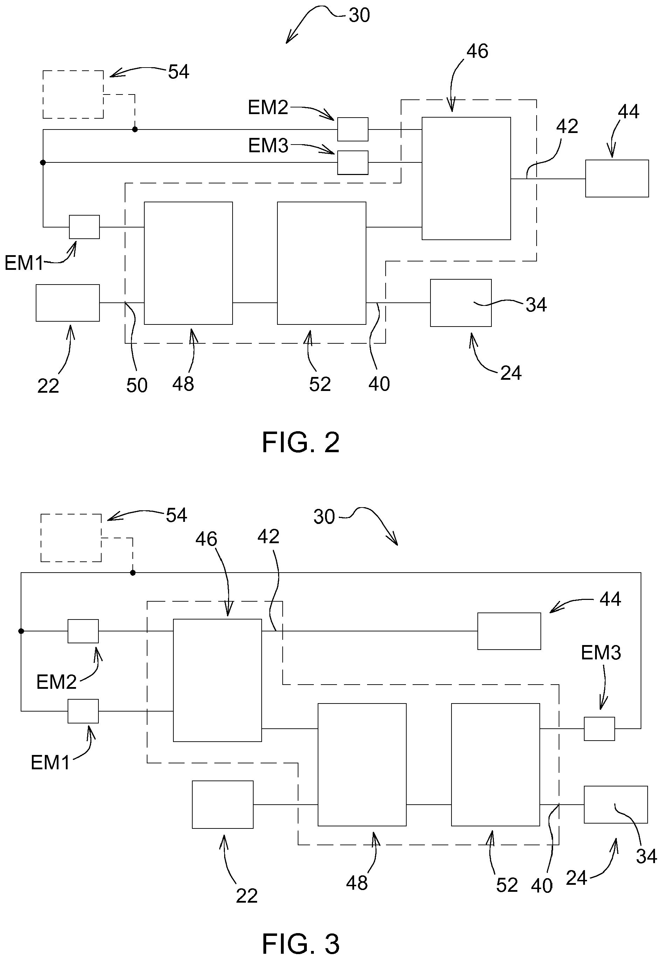

Figur 2 zeigt eine schematische Darstellung der Getriebeanordnung 30 mit einer ersten Architektur. Dabei ist die zweite Ausgangswelle 42, welche Antriebsleistung für einen Zapfwellenantrieb 44 liefert, an eine Getriebeschaltstufe 46 angeschlossen.

Weiterhin sind an die Getriebeschaltstufe 46 zwei Koppel-Energiemaschinen EM2, EM3 angeschlossen, welche von einer ersten Energiemaschine EM1 antreibbar sind.

Die erste Energiemaschine EM1 ist über eine Verzweigungsstufe 48 mit einer Eingangswelle 50 der Getriebeanordnung 30 antriebsverbunden. Die Eingangswelle 50 steht in üblicher Weise mit dem Verbrennungsmotor 22 in Wirkverbindung. Zwischen der Verzweigungsstufe 48 und der Getriebeschaltstufe 46 ist eine Antriebsleistung zusammenführende Summierstufe 52 angeordnet. Die Summierstufe 52 kann Antriebsleistung an die erste Ausgangswelle 40 und somit an den Fahrantrieb 24 mit dem Differential 34 bzw. an die hintere Fahrzeugachse 26 leiten.

Optional kann mindestens ein Energiespeicher 54 (z.B. ein elektrischer und/oder ein hydraulischer Energiespeicher) vorgesehen sein, was in Fig. 2 strichliniert angedeutet ist. Hierdurch können die Energiemaschinen EM1, EM2, EM3 für einen Hybridantrieb des Zugfahrzeugs 10 mit Energie versorgt werden. Außerdem können die Energiemaschinen EM1, EM2, EM3 den mindestens einen Energiespeicher 54 optional nachladen.

Figur 3 zeigt eine schematische Darstellung der Getriebeanordnung 30 mit einer weiteren Architekturlösung. Im Gegensatz zur Lösung gemäß Figur 2 ist in Figur 3 die erste Energiemaschine EM1 an die Getriebeschaltstufe 46 angeschlossen, während die Koppel-Energiemaschine EM3 an die Summierstufe 52 angeschlossen ist. Unter Zwischenschaltung der Getriebeschaltstufe 46 ist die erste Energiemaschine EM1 wiederum an die Verzweigungsstufe 48 angeschlossen. Außerdem kann die erste Energiemaschine EM1 auch in der Variante gemäß Figur 3 die beiden Koppel-Energiemaschinen EM2, EM3 antreiben.

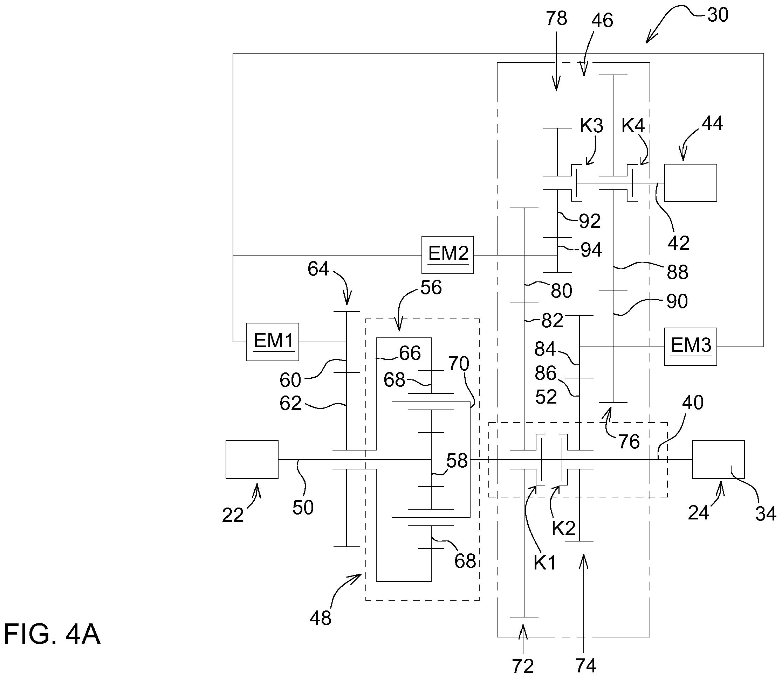

Figur 4A zeigt in Form eines Strichdiagrammes eine erste Ausführungsform der Architekturlösung gemäß Figur 2. Bei dieser Ausführungsform weist die Verzweigungsstufe 48 ein Planetengetriebe 56 (nachfolgend Verzweigungs-Planetengetriebe 56) auf. Die Eingangswelle 50 ist *mit einem Sonnenrad 58* des Verzweigungs-Planetengetriebes 56 antriebsverbunden, insbesondere drehfest verbunden. Die erste Energiemaschine EM1 ist unter Zwischenschaltung eines als Stirnradstufe mit zwei Rädern 60, 62 ausgebildeten Stufen-Radsatzes 64 mit einer Hohlrad-Welle 66 des Verzweigungs-Planetengetriebes 56 antriebsverbunden. Dabei ist die erste Energiemaschine EM1 mit dem Rad 60 drehfest verbunden, während das Rad 62 mit der Hohlrad-Welle 66 drehfest verbunden ist. Der eingangswellenseitige Stufen-Radsatz 64 kann funktionell ein Bestandteil der Verzweigungsstufe 48 sein. Die Planetenräder 68 des Verzweigungs-Planetengetriebes 56 sind an einem Planetenradträger gelagert, dessen Planetenträger-Welle 70 mit der ersten Ausgangswelle 40 antriebsverbunden, insbesondere drehfest verbunden, ist.

Die Getriebeschaltstufe 46 gemäß Figur 4A enthält einen ersten Radsatz 72, einen zweiten Radsatz 74, einen dritten Radsatz 76, einen vierten Radsatz 78 und vier Kupplungen K1, K2, K3, K4. Jeder Radsatz 72, 74, 76, 78 weist zwei miteinander zusammenwirkende Räder 80 und 82, 84 und 86, 88 und 90, 92 und 94 auf.

Die Koppel-Energiemaschine EM2 ist mit dem Rad 80 des ersten Radsatzes 72 drehfest verbunden, während dessen Rad 82 mit der Kupplung K1, insbesondere mit deren als Antriebsseite verwendeten Kupplungsseite, drehfest verbunden ist. Außerdem ist die Koppel-Energiemaschine EM2 mit dem Rad 94 des vierten Radsatzes 78 drehfest verbunden, während dessen Rad 92 mit der Kupplung K3, insbesondere mit deren als Antriebsseite verwendeten Kupplungsseite, drehfest verbunden ist.

Die Koppel-Energiemaschine EM3 ist mit dem Rad 84 des zweiten Radsatzes 74 drehfest verbunden, während dessen Rad 86 mit der Kupplung K2, insbesondere mit deren als Antriebsseite verwendeten Kupplungsseite, drehfest verbunden ist. Außerdem ist die Koppel-Energiemaschine EM3 mit dem Rad 90 des dritten Radsatzes 76 drehfest verbunden, während dessen Rad 88 mit der Kupplung K4, insbesondere mit deren als Antriebsseite verwendeten Kupplungsseite, drehfest verbunden ist.

Die Kupplungen K1, K2 sind abtriebsseitig mit der ersten Ausgangswelle 40 drehfest verbunden. Die Kupplung K3 ist antriebsseitig mit dem Rad 92 des vierten Radsatzes 78 drehfest verbunden und abtriebsseitig mit der zweiten Ausgangswelle 42 drehfest verbunden. Die Kupplung K4 ist antriebsseitig, wie bereits erwähnt, mit dem Rad 88 drehfest verbunden und abtriebsseitig mit der zweiten Ausgangswelle 42 drehfest verbunden. Die beiden Kupplungen K1, K2 können in einer Doppelfunktion die Wirkung einer Zusammenführung von Antriebsleistung haben und entsprechen insoweit auch einer Funktion der bereits erwähnten Summierstufe 52.

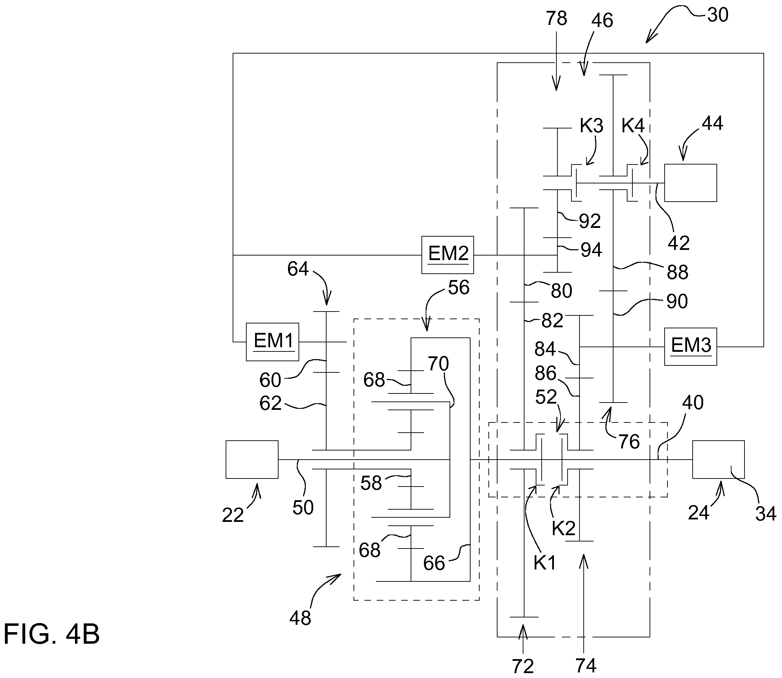

Figur 4B zeigt die Getriebeanordnung 30 mit der Getriebeschaltstufe 46, der Verzweigungsstufe 48 und der Summierstufe 52 gemäß Figur 4A, jedoch mit teilweise anders realisierten Antriebsverbindungen zwischen der Eingangswelle 50 und der ersten Ausgangswelle 40. In Figur 4B ist die Eingangswelle 50 mit der Planetenträger-Welle 70 des Verzweigungs-Planetengetriebes 56 antriebsverbunden. Dessen Sonnenrad 58 ist mit dem Rad 62 des Stufen-Radsatzes 64 antriebsverbunden. Die Hohlrad-Welle 66 des Verzweigungs-Planetengetriebes 56 ist mit der ersten Ausgangswelle 40 antriebsverbunden.

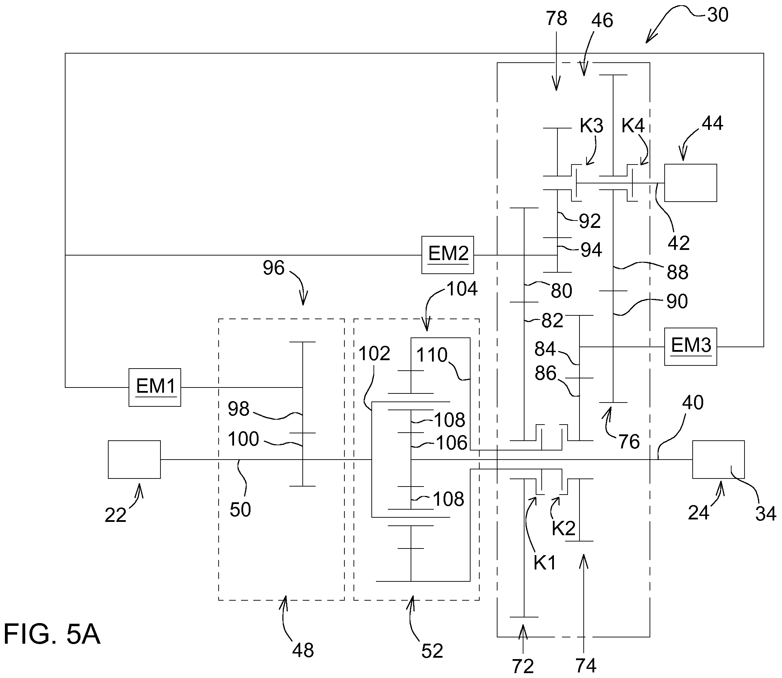

Figur 5A zeigt in Form eines Strichdiagrammes eine weitere Ausführungsform der Architekturlösung gemäß Figur 2. Bei dieser Ausführungsform weist die Verzweigungsstufe 48 einen als eine Stirnradstufe ausgebildeten Radsatz 96 (nachfolgend auch Verzweigungs-Radsatz 96) mit zwei zusammenwirkenden Rädern 98, 100 auf. Die Eingangswelle 50 ist über den Verzweigungs-Radsatz 96 mit der ersten Energiemaschine EM1 antriebsverbunden. Dabei ist die Eingangswelle 50 mit dem Rad 100 drehfest verbunden, während die erste Energiemaschine EM1 mit dem Rad 98 drehfest verbunden ist. Außerdem ist das Rad 100 mit einer Planetenträger-Welle 102 antriebsverbunden, insbesondere drehfest verbunden.

Die Planetenträger-Welle 102 ist Bestandteil eines Planetengetriebes 104 mit einem Sonnenrad 106 und mehreren Planetenrädern 108. Das Planetengetriebe 104 (auch Summier-Planetengetriebe 104) ist im Leistungsfluss derart angeordnet, dass es eine Antriebsleistung zusammenführende Wirkung hat und deshalb Bestandteil der Summierstufe 52 ist. Dabei wird insbesondere über eine Hohlrad-Welle 110, welche mit einer Abtriebseite der Kupplungen K1, K2 antriebsverbunden ist, Antriebsleistung in die Summierstufe 52 geleitet. Die zusammengeführte Antriebsleistung kann über das Sonnenrad 106 an die erste Ausgangswelle 40 weitergeleitet werden.

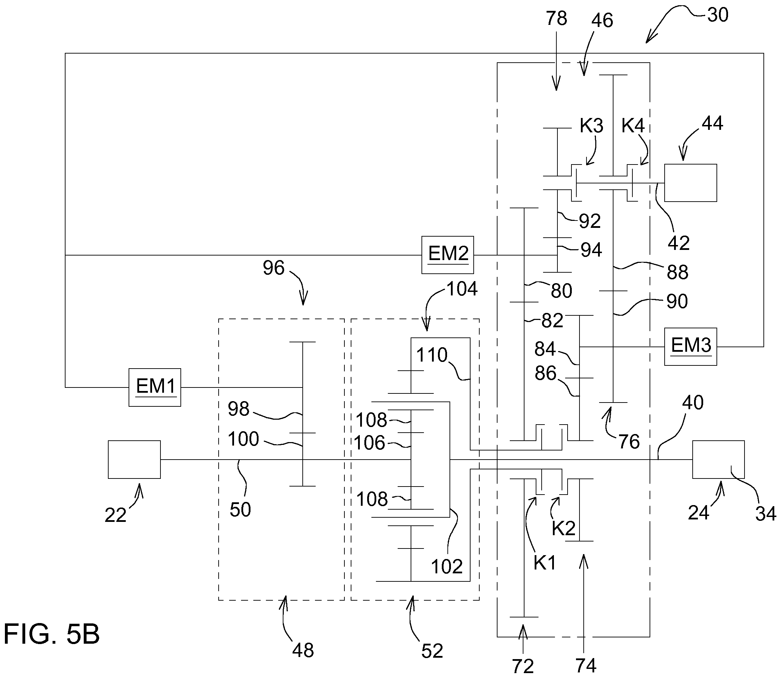

In Figur 5B sind die Antriebsverbindungen zwischen der Eingangswelle 50, dem Summier-Planetengetriebe 104 und der ersten Ausgangswelle 40 im Vergleich zur Ausführungsform gemäß Figur 5A anders realisiert. Hierbei ist in Figur 5B die Eingangswelle 50 mit dem Sonnenrad 106 des Summier-Planetengetriebes 104 antriebsverbunden, während die Planetenträger-Welle 102 des Summier-Planetengetriebes 104 mit der ersten Ausgangswelle 40 antriebsverbunden ist. Die Hohlrad-Welle 110 ist - wie bei der Variante gemäß Figur 5A - mit einer Abtriebseite der Kupplungen K1, K2 antriebsverbunden.

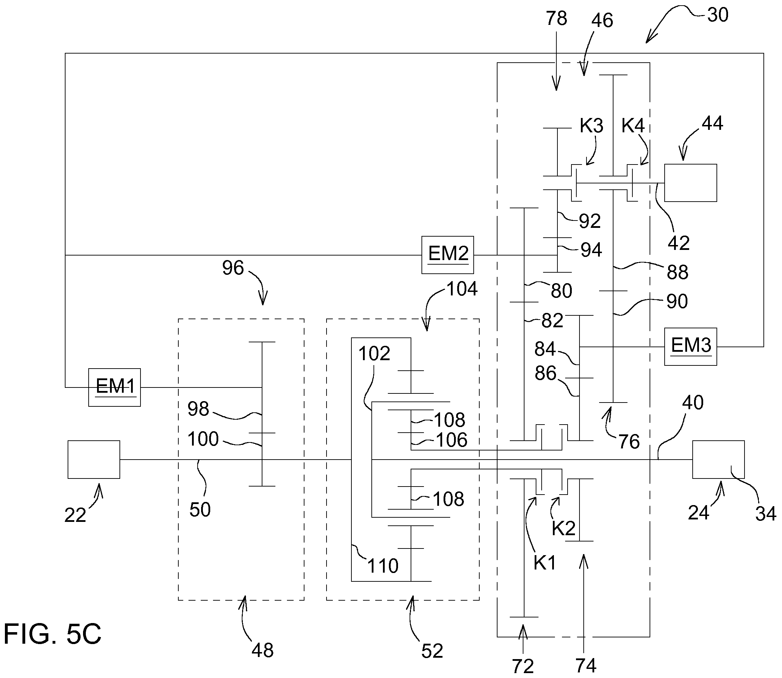

Figur 5C zeigt gegenüber Figur 5A eine weitere Variante der Antriebsverbindungen zwischen der Eingangswelle 50, dem Summier-Planetengetriebe 104 und der ersten Ausgangswelle 40. Hierbei ist in Figur 5C die Eingangswelle 50 mit der Hohlrad-Welle 110 des Summier-Planetengetriebes 104 antriebsverbunden, während die Planetenträger-Welle 102 des Summier-Planetengetriebes 104 mit der ersten Ausgangswelle 40 antriebsverbunden ist. Das Sonnenrad 106 des Summier-Planetengetriebes 104 ist mit einer Abtriebseite der Kupplungen K1, K2 antriebsverbunden.

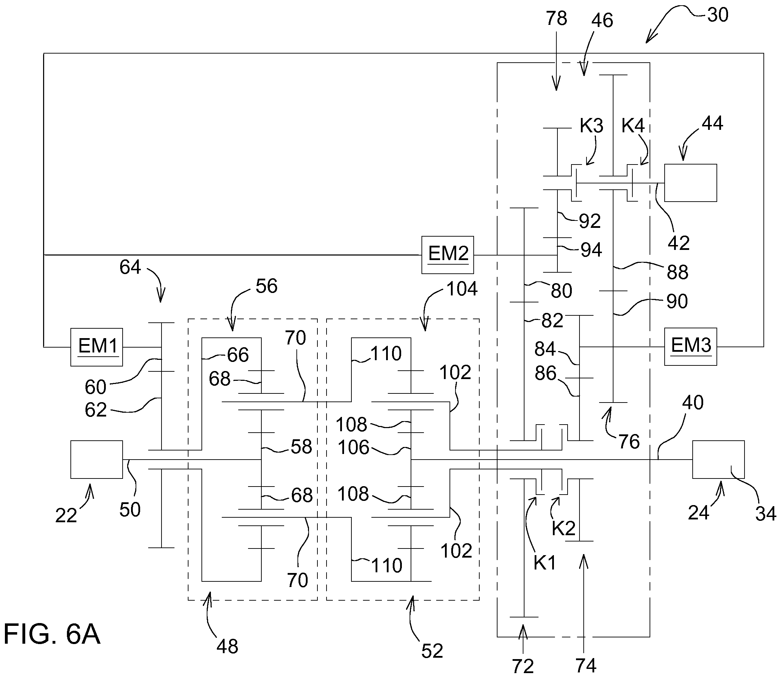

Figur 6A zeigt in Form eines Strichdiagrammes eine weitere Ausführungsform der Architekturlösung gemäß Figur 2. Bei dieser Ausführungsform weist die Verzweigungsstufe 48 das Verzweigungs-Planetengetriebe 56 auf, allerdings teilweise mit anderen Antriebsverbindungen als in den Figuren 4A, 4B. Die Summierstufe 52 weist das Summier-Planetengetriebe 104 auf, allerdings teilweise mit anderen Antriebsverbindungen als in den Figuren 5A, 5B, 5C. Die Eingangswelle 50 ist in Figur 6A mit dem Sonnenrad 58 des Verzweigungs-Planetengetriebes 56 antriebsverbunden. Die Planetenträger-Welle 70 des Verzweigungs-Planetengetriebes 56 ist mit der Hohlrad-Welle 110 des Summier-Planetengetriebes 104 antriebsverbunden, insbesondere fest verbunden. Das Summier-Planetengetriebe 104 hat wiederum die bei den Ausführungsformen gemäß den Figuren 5A, 5B, 5C erläuterte Zusammenführungswirkung für Antriebsleistung. Allerdings wird in Figur 6A insbesondere über die Planetenträger-Welle 102, welche mit einer Abtriebseite der Kupplungen K1, K2 antriebsverbunden ist, Antriebsleistung in die Summierstufe 52 geleitet. Analog zur Ausführungsform gemäß Figur 5A ist auch in Figur 6A das Sonnenrad 106 des Summier-Planetengetriebes 104 mit der ersten Ausgangswelle 40 antriebsverbunden, insbesondere drehfest verbunden.

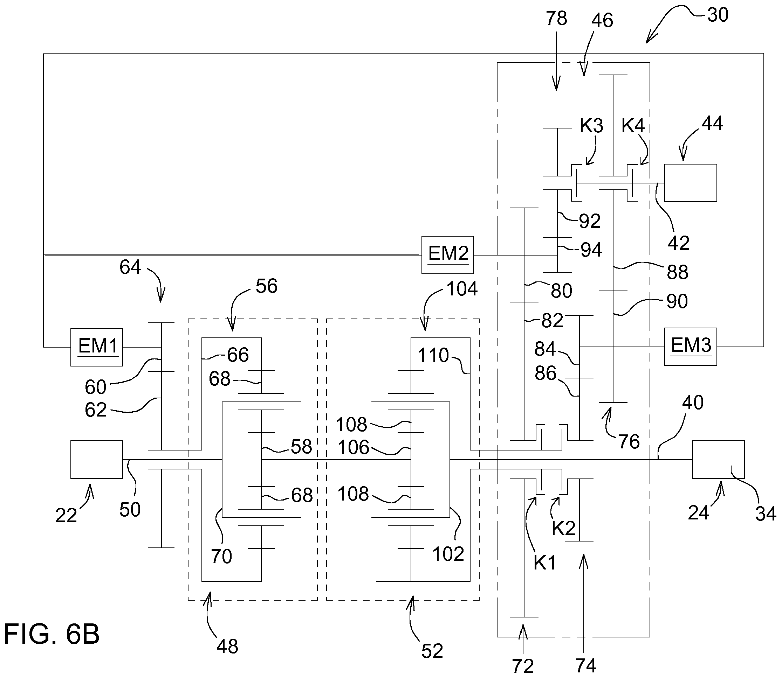

In Figur 6B sind die Antriebsverbindungen zwischen der Eingangswelle 50, dem Verzweigungs-Planetengetriebe 56, dem Summier-Planetengetriebe 104, den Kupplungen K1, K2 und der ersten Ausgangswelle 40 im Vergleich zur Ausführungsform gemäß Figur 6A anders realisiert. Hierbei ist in Figur 6B die Eingangswelle 50 mit der Planetenträger-Welle 70 des Verzweigungs-Planetengetriebes 56 antriebsverbunden, während die Planetenträger-Welle 102 des Summier-Planetengetriebes 104 mit der ersten Ausgangswelle 40 antriebsverbunden ist. Außerdem sind die beiden Sonnenräder 58, 106 miteinander antriebsverbunden, insbesondere drehfest verbunden. Die Hohlrad-Welle 110 des Summier-Planetengetriebes 104 ist - wie bei den Varianten gemäß den Figuren 5A, 5B - mit einer Abtriebseite der Kupplungen K1, K2 antriebsverbunden.

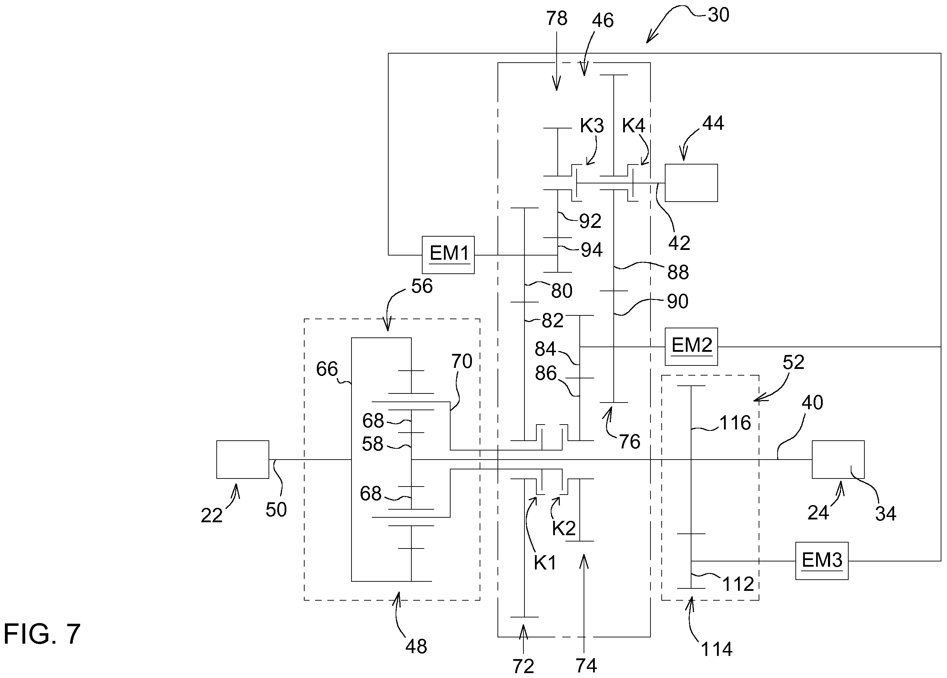

Figur 7 zeigt in Form eines Strichdiagrammes eine erste Ausführungsform der Architekturlösung gemäß Figur 3. Bei dieser Ausführungsform weist die Verzweigungsstufe 48 das Verzweigungs-Planetengetriebe 56 auf. Die Eingangswelle 50 ist mit der Hohlrad-Welle 66 des Verzweigungs-Planetengetriebes 56 antriebsverbunden, insbesondere drehfest verbunden. Das Sonnenrad 58 des Verzweigungs-Planetengetriebes 56 ist mit der ersten Ausgangswelle 40 antriebsverbunden, insbesondere drehfest verbunden. Die Planetenträger-Welle 70 des Verzweigungs-Planetengetriebes 56 ist zumindest über die Kupplung K1 derart antriebsverbindbar, dass auch die erste Energiemaschine EM1 über die Verzweigungsstufe 48 mit der Eingangswelle 50 antriebsverbindbar ist und folglich mit anteiliger Antriebsleistung versorgt werden kann. Analog kann in einer bevorzugten Ausführungsform auch die mit dem zweiten und dritten Radsatz 74, 76 antriebsverbundene Koppel-Energiemaschine (hier EM2) über die Kupplung K2 mit anteiliger Antriebsleistung der Eingangswelle 50 versorgt werden.

Wie in Figur 7 erkennbar, ist bei der Architektur gemäß Figur 3 die erste Energiemaschine EM1 mit dem Rad 80 des ersten Radsatzes 72 antriebsverbunden, insbesondere drehfest verbunden. Eine der Koppel-Energiemaschinen EM2, EM3 (hier EM2) ist weiterhin mit dem Rad 90 des dritten Radsatzes 76 antriebsverbunden. Im Gegensatz zu der Architekturlösung gemäß Figur 2 ist allerdings bei der Getriebearchitektur gemäß Figur 3 eine der Koppel-Energiemaschinen EM2, EM3 (hier EM3) mit der Summierstufe 52 antriebsverbunden. In Figur 7 ist hierzu eine drehfeste Verbindung zwischen der Koppel-Energiemaschine EM3 und einem Rad 112 eines Radsatzes 114 vorgesehen. Der Radsatz 114 in Form einer Stirnradstufe wirkt als die Summierstufe 52 und hat zwei zusammenwirkende Räder 112, 116. Dabei ist das Rad 116 mit der ersten Ausgangswelle 40 drehfest verbunden.

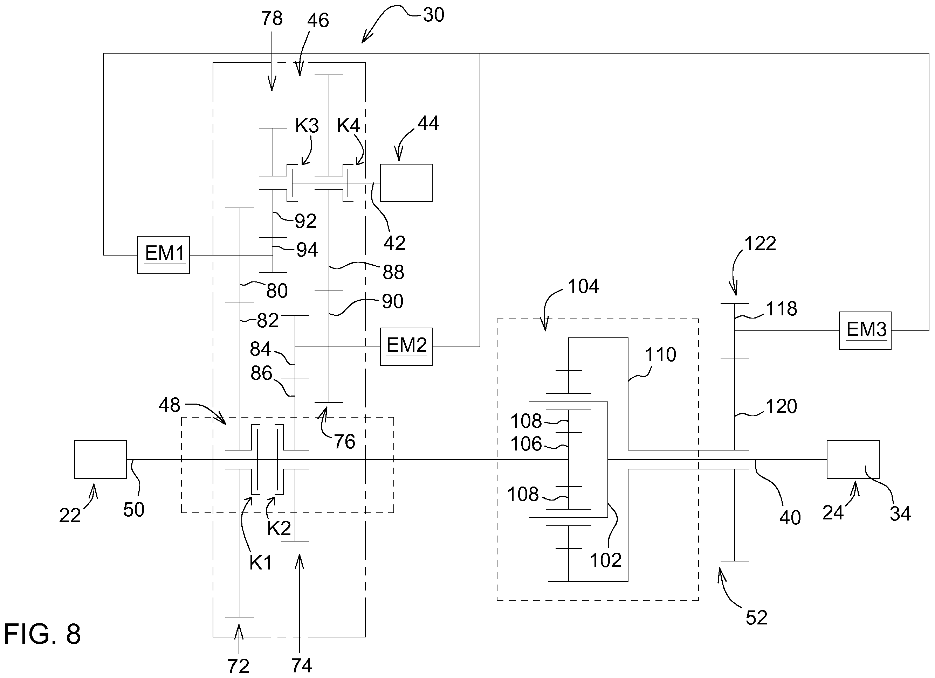

Figur 8 zeigt in Form eines Strichdiagrammes eine weitere Ausführungsform der Architekturlösung gemäß Figur 3. Bei dieser Ausführungsform weist die Summierstufe 52 das Summier-Planetengetriebe 104 auf. Eine Koppel-Energiemaschine (hier EM3) ist unter Zwischenschaltung eines als Stirnradstufe mit zwei Rädern 118, 120 ausgebildeten Stufen-Radsatzes 122 mit der Hohlrad-Welle 110 des Summier-Planetengetriebes 104 antriebsverbunden. Dabei ist die Koppel-Energiemaschine EM3 mit dem Rad 118 drehfest verbunden, während das Rad 120 mit der Hohlrad-Welle 110 drehfest verbunden ist. Der ausgangswellenseitige Stufen-Radsatz 122 kann funktionell ein Bestandteil der Summierstufe 52 sein.

Weiterhin ist Figur 8 entnehmbar, dass die Eingangswelle oder eine Verlängerung derselben mit dem Sonnenrad 106 des Summier-Planetengetriebes 104 antriebsverbunden, insbesondere drehfest verbunden, ist. Über das Sonnenrad 106 und über die Hohlrad-Welle 110 kann Antriebsleistung in die Summierstufe 52 geleitet werden. Die zusammengeführte Antriebsleistung kann über die Planetenträger-Welle 102 an die erste Ausgangswelle 40 weitergeleitet werden.

Die erste Energiemaschine EM1 kann, ebenso wie bei der Variante gemäß Figur 7, grundsätzlich auch bei der Ausführungsform gemäß Figur 8 leistungsverzweigte, d.h. anteilige Antriebsleistung von der Eingangswelle 50 erhalten. Zu diesem Zweck wird die Kupplung K1 angesteuert und vorzugsweise in ihren geschlossenen Zustand überführt. Analog kann in einer bevorzugten Ausführungsform auch die mit dem zweiten und dritten Radsatz 74, 76 antriebsverbundene Koppel-Energiemaschine (hier EM2) über die Kupplung K2 mit anteiliger Antriebsleistung der Eingangswelle 50 versorgt werden. Insoweit können die beiden Kupplungen K1, K2 bei der Ausführungsform gemäß Figur 8 funktionell die Wirkung einer Leistungsverzweigung von Antriebsleistung haben und entsprechen insoweit auch einer Funktion der Verzweigungsstufe 48.

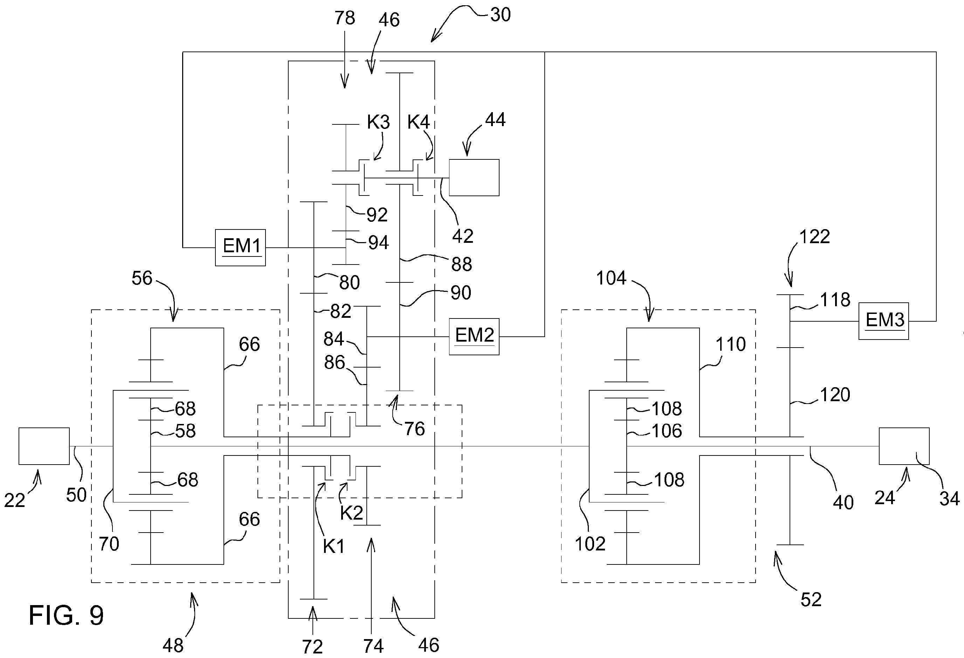

Figur 9 zeigt in Form eines Strichdiagrammes eine weitere Ausführungsform der Architekturlösung gemäß Figur 3. Bei dieser Ausführungsform ist die Summierstufe 52 mit einer Koppel-Energiemaschine (hier EM3) antriebsverbunden. Die erste Ausgangswelle 40 ist mit dem Sonnenrad 106 des Summier-Planetengetriebes 104 antriebsverbunden, insbesondere drehfest verbunden.

In Figur 9 ist die Eingangswelle 50 analog zur Variante gemäß Figur 7 grundsätzlich mit der Verzweigungsstufe 48 bzw. dem Verzweigungs-Planetengetriebe 56 antriebsverbunden. Allerdings ist die Eingangswelle 50 in Figur 9 mit der Planetenträger-Welle 70 des Verzweigungs-Planetengetriebes 56 antriebsverbunden, insbesondere drehfest verbunden. Die Hohlrad-Welle 66 des Verzweigungs-Planetengetriebes 56 ist mit den beiden Kupplungen K1, K2 gekoppelt, so dass die erste Energiemaschine EM1 und vorzugsweise auch eine Koppel-Energiemaschine (hier EM2) von der Eingangswelle 50 über die Verzweigungsstufe 48 mit anteiliger Antriebsleistung versorgt werden können. Das Sonnenrad 58 des Verzweigungs-Planetengetriebes 56 ist mit der Planetenträger-Welle 102 des Summier-Planetengetriebes 104 antriebsverbunden, insbesondere drehfest verbunden.

Bei allen Ausführungsformen ermöglicht es der Antrieb der Energiemaschinen EM1, EM2, EM3 in Kombination mit einer entsprechenden Ansteuerung (Öffnen und Schlie-ßen) der Kupplungen K1 bis K4, die Geschwindigkeit und das Drehmoment der beiden Ausgangswellen 40, 42 in einem hohen Maße zu variieren. Der hierfür benötigte Bauteileaufwand und Bauraum für die Getriebeanordnung 30 bleibt dennoch vorteilhaft gering.

**Patentansprüche**

1. Getriebeanordnung (30) für einen Antriebsstrang (20) eines landwirtschaftlichen Zugfahrzeugs (10), mit einer Eingangswelle (50), einer ersten Ausgangswelle (40) für einen Fahrantrieb (24, 32, 34), einer zweiten Ausgangswelle (42) für einen Zapfwellenantrieb (44) und einer ersten Energiemaschine (EM1), welche über eine Verzweigungsstufe (48) mit der Eingangswelle (50) antriebsverbunden oder antriebsverbindbar ist, wobei Leistung der ersten Energiemaschine (EM1) an mindestens eine Koppel-Energiemaschine (EM2, EM3) übertragbar ist, **dadurch gekennzeichnet, dass** mindestens eine Koppel-Energiemaschine (EM2, EM3) über Kupplungen (K1, K2, K3, K4) einer Getriebeschaltstufe (46) wahlweise mit der ersten Ausgangswelle (40) und/oder mit der zweiten Ausgangswelle (42) antriebsverbindbar ist.

2.  Getriebeanordnung nach Anspruch 1, **dadurch gekennzeichnet, dass** sämtliche Koppel-Energiemaschinen (EM2, EM3) über Kupplungen (K1, K2, K3, K4) der Getriebeschaltstufe (46) wahlweise mit der ersten Ausgangswelle (40) und/oder mit der zweiten Ausgangswelle (42) antriebsverbindbar sind.

3.  Getriebeanordnung nach Anspruch 1 oder 2, **dadurch gekennzeichnet, dass** die Verzweigungsstufe (48)

    - einen Verzweigungs-Radsatz (96) enthält, oder
    - ein Verzweigungs-Planetengetriebe (56) enthält, oder
    - mindestens eine Kupplung (K1, K2) der Getriebeschaltstufe (46) enthält.

4.  Getriebeanordnung nach einem der vorhergehenden Ansprüche, **dadurch gekennzeichnet, dass** im Leistungsfluss zwischen der Verzweigungsstufe (48) und der ersten Ausgangswelle (40) eine Summierstufe (52) angeordnet ist, welche Antriebsleistung von der Verzweigungsstufe (48) und Antriebsleistung von mindestens einer Koppel-Energiemaschine (EM2, EM3) zusammenführt.

5.  Getriebeanordnung nach Anspruch 4, **dadurch gekennzeichnet, dass** die Summierstufe (52)

    - einen Summier-Radsatz (106) enthält, oder
    - ein Summier-Planetengetriebe (94) enthält, oder
    - mindestens eine Kupplung (K1, K2) der Getriebeschaltstufe (46) enthält.

6.  Getriebeanordnung nach einem der vorhergehenden Ansprüche, **dadurch gekennzeichnet, dass**

    - im Leistungsfluss zwischen dem Verzweigungs-Planetengetriebe (56) und der ersten Energiemaschine (EM1) ein Antriebsleistung übertragender Stufen-Radsatz (64) angeordnet ist, und/oder
    - im Leistungsfluss zwischen dem Summier-Planetengetriebe (104) und einer Koppel-Energiemaschine (EM3) ein Antriebsleistung übertragender Stufen-Radsatz (122) angeordnet ist.

7.  Getriebeanordnung nach einem der vorhergehenden Ansprüche, **dadurch gekennzeichnet, dass** die Verzweigungsstufe (48) mit der Summierstufe (52) antriebsverbunden ist und/oder die Summierstufe (52) mit mindestens einer Kupplung (K1, K2) der Getriebeschaltstufe (46) antriebsverbunden ist derart, dass

    - ein Rad (100) des Verzweigungs-Radsatzes (96) mit einem Sonnenrad (106) oder einer Planetenträger-Welle (102) oder einer Hohlrad-Welle (110) des Summier-Planetengetriebes (104) antriebsverbunden ist, und/oder
    - ein Sonnenrad (58) des Verzweigungs-Planetengetriebes (56) mit einem Sonnenrad (106) oder einer Planetenträger-Welle (102) oder einer Hohlrad-Welle (110) des Summier-Planetengetriebes (104) antriebsverbunden ist, und/oder
    - eine Planetenträger-Welle (70) des Verzweigungs-Planetengetriebes (56) mit einer Hohlrad-Welle (110) des Summier-Planetengetriebes (104) antriebsverbunden ist, und/oder
    - ein Sonnenrad (58) des Verzweigungs-Planetengetriebes (56) mit einem Rad (116) des Summier-Radsatzes (114) antriebsverbunden ist, und/oder
    - ein Sonnenrad (58) oder eine Planetenträger-Welle (70) oder eine Hohlrad-Welle (66) des Verzweigungs-Planetengetriebes (56) mit einer Antrieb- oder Abtriebseite mindestens einer Kupplung (K1, K2) der Getriebeschaltstufe (46) antriebsverbunden ist, und/oder
    - ein Sonnenrad (106) oder eine Planetenträger-Welle (102) oder eine Hohlrad-Welle (110) des Summier-Planetengetriebes (104) mit einer Antrieb- oder Abtriebseite mindestens einer Kupplung (K1, K2) der Getriebeschaltstufe (46) antriebsverbunden ist.

8.  Getriebeanordnung nach einem der vorhergehenden Ansprüche, **dadurch gekennzeichnet, dass** die Eingangswelle (50)

    - mit einem Rad (100) des Verzweigungs-Radsatzes (96) antriebsverbunden ist, und/oder
    - mit einem Sonnenrad (58) oder einer Planetenträger-Welle (70) oder einer Hohlrad-Welle (66) des Verzweigungs-Planetengetriebes (56) antriebsverbunden ist, und/oder
    - mit einem Sonnenrad (106) oder einer Planetenträger-Welle (102) oder einer Hohlrad-Welle (110) des Summier-Planetengetriebes (104) antriebsverbunden ist, und/oder
    - mit einer Antrieb- oder Abtriebseite mindestens einer Kupplung (K1, K2) der Getriebeschaltstufe (46) antriebsverbunden ist.

9.  Getriebeanordnung nach einem der vorhergehenden Ansprüche, **dadurch gekennzeichnet, dass** die erste Ausgangswelle (40)

- mit einem Rad (116) des Summier-Radsatzes (114) antriebsverbunden ist, und/oder

- mit einem Sonnenrad (106) oder einer Planetenträger-Welle (102) oder einer Hohlrad-Welle (110) des Summier-Planetengetriebes (104) antriebsverbunden ist, und/oder

- mit einem Sonnenrad (58) oder einer Planetenträger-Welle (70) oder einer Hohlrad-Welle (66) des Verzweigungs-Planetengetriebes (56) antriebsverbunden ist, und/oder

- mit einer Antrieb- oder Abtriebseite mindestens einer Kupplung (K1, K2) der Getriebeschaltstufe (46) antriebsverbunden ist.

10. Getriebeanordnung nach einem der vorhergehenden Ansprüche, **dadurch gekennzeichnet, dass** die eine Koppel-Energiemaschine (EM2, EM3), insbesondere eine erste Koppel-Energiemaschine (EM2), mit der ersten Ausgangswelle (40) für den Fahrantrieb (24, 32, 34) und die andere der Koppel-Energiemaschinen (EM2, EM3), insbesondere eine zweite Koppel-Energiemaschine (EM3), mit der zweiten Ausgangswelle (42) für den Zapfwellenantrieb (44) verbunden ist, wenn eine Drehzahl (n) der ersten Koppel-Energiemaschine (EM2)kleiner als ein oder gleich einem Drehzahlschwellwert ($n_{schwell}$) ist, und die zweite Koppel-Energiemaschinen (EM3) mit der zweiten Ausgangswelle (42) verbunden ist, wenn eine Drehzahl (n) der ersten Koppel-Energiemaschine (EM2)grösser als der Drehzahlschwellwert ($n_{schwell}$) ist.

11. Getriebeanordnung nach einem der vorhergehenden Ansprüche, **dadurch gekennzeichnet, dass** die zweite Koppel-Energiemaschinen (EM3) mit der ersten und zweiten Ausgangswelle (40, 42) verbunden ist, wenn eine Drehzahl (n) der ersten Koppel-Energiemaschine (EM2) grösser als der Drehzahlschwellwert ($n_{schwell}$) ist.

12. Getriebeanordnung nach einem der vorhergehenden Ansprüche, **dadurch gekennzeichnet, dass** eine Koppel-Energiemaschine (EM3) über die Summierstufe (52) mit der ersten Ausgangswelle (40) antriebsverbunden ist.

13. Getriebeanordnung nach einem der vorhergehenden Ansprüche, **dadurch gekennzeichnet, dass** die erste Energiemaschine (EM1) und/oder mindestens eine Koppel-Energiemaschine (EM2, EM3) als eine Koppel-Energiemaschine oder als eine Hydromaschine ausgebildet ist.

14. Getriebeanordnung nach einem der vorhergehenden Ansprüche, **dadurch gekennzeichnet, dass** die Getriebeanordnung (30) mindestens einen Energiespeicher (54) enthält, welcher an die erste Energiemaschine (EM1) und/oder an mindestens eine Koppel-Energiemaschine (EM2, EM3) angeschlossen ist.

15. Landwirtschaftliches Zugfahrzeug (10) mit einer Getriebeanordnung (30) nach einem der Ansprüche 1 bis 14, wobei die Eingangswelle (50) der Getriebeanordnung (30) mit einem Verbrennungsmotor (22) des Zugfahrzeugs (10) verbunden oder verbindbar ist.

FIG. 1

FIG. 2

FIG. 3

FIG. 4A

FIG. 4B

EP 4 678 941 A1

FIG. 5A

EP 4 678 941 A1

FIG. 5B

EP 4 678 941 A1

FIG. 5C

EP 4 678 941 A1

FIG. 6A

FIG. 6B

EP 4 678 941 A1

FIG. 7

EP 4 678 941 A1

FIG. 8

FIG. 9

Europäisches Patentamt
European Patent Office
Office européen des brevets

# EUROPÄISCHER RECHERCHENBERICHT

**Nummer der Anmeldung**

EP 24 18 8296

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 044179 A1 (DEERE & CO [US]) 10. Mai 2007 (2007-05-10) | 1-9, 12-15 | INV. F16H37/08 B60K17/28 |
| Y | * Absätze [0012], [0046], [0058], [0063] - [0065]; Abbildung 1 * | 11 | |
| | ----- | | |
| X | DE 10 2023 103686 A1 (DANA BELGIUM NV [BE]) 17. August 2023 (2023-08-17) | 1-9, 12-15 | |
| Y | * Absätze [0051] - [0055]; Abbildungen 1,5,6B,7 * | 11 | |
| | ----- | | |
| X | EP 3 927 571 B1 (CNH IND ITALIA SPA [IT]) 5. April 2023 (2023-04-05) * Absätze [0032] - [0038]; Abbildung 2 * | 1,2,10, 13-15 | |
| | ----- | | |
| X | WO 2020/165393 A1 (CNH IND ITALIA SPA [IT]; CNH IND AMERICA LLC [US] ET AL.) 20. August 2020 (2020-08-20) * Seiten 1,2 * | 1,2, 13-15 | |
| | ----- | | |
| X | GB 2 593 629 A (UNIV JIANGSU [CN]) 29. September 2021 (2021-09-29) * Abbildungen 1,2,13 * | 1-9, 13-15 | RECHERCHIERTE SACHGEBIETE (IPC) B60K F16H |
| | ----- | | |
| Y | JP 2002 356116 A (ISEKI AGRICULT MACH) 10. Dezember 2002 (2002-12-10) * Absatz [0018] * | 11 | |
| | ----- | | |

Der vorliegende Recherchenbericht wurde für alle Patentansprüche erstellt

| Recherchenort | Abschlußdatum der Recherche | Prüfer |
|---|---|---|
| München | 15. November 2024 | Martínez Hurtado, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 8296

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2024

| Im Recherchenbericht angeführtes Patentdokument | Datum der Veröffentlichung | Mitglied(er) der Patentfamilie | | Datum der Veröffentlichung |
|---|---|---|---|---|
| DE 102005044179 A1 | 10-05-2007 | AT | E471835 T1 | 15-07-2010 |
| | | DE | 102005044179 A1 | 10-05-2007 |
| | | EP | 1926622 A1 | 04-06-2008 |
| | | US | 2011042155 A1 | 24-02-2011 |
| | | WO | 2007031399 A1 | 22-03-2007 |
| DE 102023103686 A1 | 17-08-2023 | DE | 102023103686 A1 | 17-08-2023 |
| | | US | 2023256807 A1 | 17-08-2023 |
| EP 3927571 B1 | 05-04-2023 | EP | 3927571 A1 | 29-12-2021 |
| | | US | 2022176802 A1 | 09-06-2022 |
| | | WO | 2020169539 A1 | 27-08-2020 |
| WO 2020165393 A1 | 20-08-2020 | US | 2022134860 A1 | 05-05-2022 |
| | | WO | 2020165393 A1 | 20-08-2020 |
| GB 2593629 A | 29-09-2021 | KEINE | | |
| JP 2002356116 A | 10-12-2002 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3945665 A1